# EUROPEAN PATENT SPECIFICATION

(11) **EP 4 037 023 B1**
(45) Date of publication and mention of the grant of the patent: **22.04.2026**
(21) Application number: 20869343.2
(22) Date of filing: 24.09.2020
(51) Int. Cl.: H01M 4/14, H01M 4/62, H01M 10/06, H01M 50/463

(54) **LEAD ACID STORAGE BATTERY**
BLEI-SÄURE-AKKUMULATOR
BATTERIE D'ACCUMULATEURS AU PLOMB-ACIDE

(30) Priority: 27.09.2019 JP 2019178091
(43) Date of publication of application: 03.08.2022
(73) Proprietor: GS Yuasa International Ltd., Kisshoin, Minami-ku, Kyoto-shi, Kyoto 601-8520 (JP)
(72) Inventor: SUGIMURA, Fumiya, Kyoto-shi, Kyoto 601-8520 (JP); TSUJINAKA, Akihito, Kyoto-shi, Kyoto 601-8520 (JP)
(74) Representative: Isarpatent
(86) International application number: PCT/JP2020/035918
(87) International publication number: WO 2021/060327

(56) References cited:
- EP-A1- 2 571 091
- EP-A1- 3 389 131
- WO-A1-2017/110594
- WO-A1-2017/110594
- WO-A1-2019/021690
- WO-A1-2019/087678
- JP-A- 2013 161 606
- JP-A- 2018 018 742
- JP-A- 2018 018 798
- JP-A- 2018 018 802
- JP-A- 2018 142 557

## Description

### TECHNICAL FIELD

The present invention relates to a lead-acid battery.

### BACKGROUND ART

Lead-acid batteries are in use for various applications, including automotive and industrial applications. A lead-acid battery includes a negative electrode plate, a positive electrode plate, and an electrolyte solution. The negative electrode plate includes a current collector and a negative electrode material. An organic expander is added to the negative electrode material. As the organic expander, in addition to a naturally occurring organic expander such as sodium ligninsulfonate, a synthetic organic expander is also used. Examples of the synthetic organic expander include condensates of bisphenols.

Patent Document 1 describes a lead-acid battery including a positive electrode, a negative electrode, and an electrolyte solution, in which the negative electrode has a negative electrode material and a negative current collector, the negative electrode material contains a bisphenol resin and a negative active material, the negative current collector has a lug part, and a surface layer of Sn or a Sn alloy is formed on the lug part.

Patent Document 2 describes a flooded-type lead-acid battery including a negative active material containing spongy lead as a main component, a positive active material containing lead dioxide as a main component, and an electrolyte solution containing sulfuric acid and being freely flowable, wherein the negative active material contains carbon, at least one substance selected from the group consisting of cellulose ether, a polycarboxylic acid, and salts thereof, and a water-soluble polymer composed of a bisphenol condensate having a sulfonic acid group, and the positive active material contains antimony.

Patent Document 3 describes a flooded-type lead-acid battery including a negative active material containing spongy lead as a main component, a positive active material containing lead dioxide as a main component, and an electrolyte solution containing sulfuric acid and being freely flowable, wherein the negative active material contains 0.5% by mass or more and 2.5% by mass or less of carbon black, per 100% by mass of the spongy lead in a formed state, a water-soluble polymer composed of a bisphenol condensate having a sulfonic acid group as a substituent, and at least one polycarboxylic acid compound selected from the group consisting of a polyacrylic acid, a polymethacrylic acid, and a polymaleic acid and salts thereof, and the electrolyte solution has a carbon black concentration of 3 massppm or less in the formed state.

Patent Document 4 describes a negative electrode plate for a lead-acid battery in which a formaldehyde condensate of bisphenols and sulfite or an amino acid are added to an active material.

Patent Document 5 describes a lead-acid battery including a positive electrode, a negative electrode, and an electrolyte solution, wherein the negative electrode has a negative active material to which a mixed additive is added, and the mixed additive contains a mixture of bisphenol A/aminobenzenesulfonic acid/formaldehyde condensate and lignin.

### PRIOR ART DOCUMENTS

### PATENT DOCUMENTS

Patent Document 1: JP-A-2017-79166
Patent Document 2: WO 2013/150754 A
Patent Document 3: JP-A-2013-161606
Patent Document 4: JP-A-11-121008
Patent Document 5: JP-A-11-250913

Reference may also be made to patent document JP-A-2018-142557 which discloses a lead-acid battery comprising 0.2% by mass (in terms of solid content) of a bisphenol type resin in a negative electrode active material.

### SUMMARY OF THE INVENTION

### PROBLEMS TO BE SOLVED BY THE INVENTION

In a lead-acid battery used in a charge-discharge cycle including deep discharge, when charge-discharge are repeated for a long time, the temperature of the battery increases. This is because the lead-acid battery is likely to be in an overcharged state during charge, so that heat is generated, and in addition, the resistance increases with deep discharge at the time of discharging, so that heat generation increases. When a charge-discharge cycle including deep discharge is performed at a high temperature, the organic expander is easily eluted from the negative electrode material, and elution of lead is also remarkable. When the elution of lead becomes remarkable, a permeation short circuit is likely to occur. In particular, when the distance between the positive electrode plate and the negative electrode plate is small, the utilization factor of the electrolyte solution is high and the specific gravity of the electrolyte solution tends to decrease, so that the permeation short circuit becomes remarkable.

### MEANS FOR SOLVING THE PROBLEMS

The invention is defined by the appended claims.

One general aspect of the present disclosure relates to a lead-acid battery including at least one element and an electrolyte solution,
wherein the element includes a positive electrode plate, a negative electrode plate, and a separator interposed between the positive electrode plate and the negative electrode plate,
in the at least one element,
the negative electrode plate includes a negative electrode material,
the negative electrode material includes an organic expander (excluding a lignin compound) containing a unit of a monocyclic aromatic compound, and
an inter-electrode distance between the positive electrode plate and the negative electrode plate is less than 1.1 mm.

### ADVANTAGES OF THE INVENTION

The occurrence of a permeation short circuit in the lead-acid battery can be suppressed.

### BRIEF DESCRIPTION OF THE DRAWINGS

Fig. 1 is a perspective view schematically showing an example in which a lid of a lead-acid battery according to an embodiment of the present invention is removed.
Fig. 2A is a front view of the lead-acid battery in Fig. 1.
Fig. 2B is a schematic cross-sectional view of a cross section taken along line IIB-IIB in Fig. 1A as viewed from an arrow direction.
Fig. 3 is an explanatory view of a measurement position of a thickness of an electrode plate.
Fig. 4 is a graph showing results of Table 1.
Fig. 5 is a graph showing results of Table 2.
Fig. 6 is a graph showing results of Table 3.
Fig. 7 is a graph showing results of Table 4.

### MODE FOR CARRYING OUT THE INVENTION

A lead-acid battery according to the present invention includes at least one element and an electrolyte solution. The element includes a positive electrode plate, a negative electrode plate, and a separator interposed between the positive electrode plate and the negative electrode plate. In the at least one element, the negative electrode plate contains a negative electrode material, the negative electrode material contains an organic expander (excluding a lignin compound) containing a unit of a monocyclic aromatic compound, and an inter-electrode distance between the positive electrode plate and the negative electrode plate is less than 1.1 mm.

When a charge-discharge cycle including deep discharge at a high temperature (hereinafter, referred to simply as a deep discharge cycle) is performed on a lead-acid battery, when the inter-electrode distance between the positive electrode plate and the negative electrode plate is 1.1 mm or more, the occurrence rate of a permeation short circuit hardly changes depending on the type of organic expander. On the other hand, the present inventors have found that when the inter-electrode distance is less than 1.1 mm, the occurrence rate of a permeation short circuit greatly varies depending on the type of organic expander.

In the lead-acid battery according to the present invention, an organic expander containing a unit of a monocyclic aromatic compound (excluding a lignin compound) is used. The lignin compound has a three-dimensionally developed polymer structure. In the condensate of bisphenol, the aromatic ring easily interacts between π electrons, and the condensate of bisphenol tends to be rigid. On the other hand, the organic expander described above is easy to have a planar structure and has high molecular flexibility as compared with a lignin compound or a condensate of bisphenol. This is considered to increase the adsorptivity of the organic expander to the component contained in the negative electrode material (in particular, lead and lead sulfate). Therefore, it is considered that even when a deep discharge cycle is performed at a high temperature, the organic expander is retained in the negative electrode material, whereby the anti-shrink effect is exhibited, and the outflow of lead is suppressed. Therefore, although the inter-electrode distance is as small as less than 1.1 mm, the utilization factor of the electrolyte solution is high, and the specific gravity of the electrolyte solution tends to decrease, the occurrence of a permeation short circuit can be suppressed by using the organic expander.

In general, when the organic expander is eluted from the negative electrode material, the eluted organic expander reaches the positive electrode plate and is decomposed, and reduction deterioration of the positive electrode material occurs. As a result, falling off of the positive electrode material is promoted, and the amount of solid matter (sediment) derived from the positive electrode material in the battery increases. When the amount of the sediment increases, a short circuit (sediment short circuit) via the sediment easily occurs. In the lead-acid battery according to one aspect of the present invention, elution of the organic expander from the negative electrode material is suppressed as described above. Therefore, the sediment is reduced, and the occurrence rate of the sediment short circuit can be reduced.

When the lead-acid battery includes a plurality of elements, in one element, the negative electrode plate contains the organic expander, and the inter-electrode distance is within the above range, the above effect can be obtained at least in a cell including the element. The lead-acid battery may be designed such that the negative electrode plate contains the organic expander, and the inter-electrode distance is less than 1.1 mm (preferably 1.0 mm or less) in two or more elements (for example, 50% or more of the total number of the elements (preferably 80% or more, more preferably all the elements)).

Herein, a lignin compound includes lignin and a lignin derivative. The Lignin derivative includes one having a lignin-like three-dimensional structure. Examples of the lignin derivative include at least one selected from the group consisting of modified lignin, lignin sulfonic acid, modified lignin sulfonic acid, and salts thereof (alkali metal salt (sodium salts, etc.), magnesium salt, calcium salt, etc.).

The inter-electrode distance is determined for a lead-acid battery in a fully charged state.

In the present specification, the fully charged state of the lead-acid battery is defined by the definition of Japanese Industrial Standards (JIS) D 5301: 2006. More specifically, the following state is defined as a fully charged state: the lead-acid battery is charged in a water bath at 25°C ± 2°C at a current (A) 0.2 times as large as a numerical value described as a rated capacity (Ah) until a terminal voltage during charge measured every 15 minutes or an electrolyte solution density subjected to temperature correction to 20°C exhibits a constant value at three significant digits continuously three times. Note that the numerical value described as the rated capacity is a numerical value in which the unit is Ah. The unit of the current set based on the numerical value indicated as the rated capacity is A.

The lead-acid battery in a fully charged state means a lead-acid battery fully charged with an already formed lead-acid battery. The full charge of the lead-acid battery may be performed immediately after formation so long as being performed after formation or may be performed after the lapse of time from formation (e.g., a lead-acid battery in use (preferably at the initial stage of use) after formation may be fully charged). The battery at the initial stage of use means to a battery that has not been used for a long time and has hardly deteriorated.

The lead-acid battery according to one aspect of the present invention is useful as a flooded-type (vent type) lead-acid battery in which the specific gravity of the upper part of the electrolyte solution after charge is likely to decrease with a deep discharge cycle. In particular, in a lead-acid battery using a clad-type positive electrode plate, the length of the positive electrode plate tends to be long, and the lead-acid battery is often used in a deep discharge cycle, so that the decrease in specific gravity of the upper part of the electrolyte solution after charge becomes remarkable. Even when such a clad-type positive electrode plate is used, occurrence of a permeation short circuit can be effectively suppressed by using the organic expander.

Hereinafter, the lead-acid battery according to an embodiment of the present invention will be described for each of the main constituent elements, but the present invention is not limited to the following embodiment.

### [Lead-acid battery]

### (Inter-electrode distance)

A distance between a positive electrode plate and a negative electrode plate (inter-electrode distance) is less than 1.1 mm and may be 1.0 mm or less. The inter-electrode distance may be 0.2 mm or more.

The inter-electrode distance is measured by the following procedure.

The lead-acid battery in a fully charged state is disassembled to take out the element, and the inter-electrode distance is calculated from the equation: "inter-electrode distance = (pitch - thickness of positive electrode plate - thickness of negative electrode plate)/2". The pitch is a distance between centers of lugs of a pair of adjacent positive electrode plates. The pitch is determined for all adjacent pairs of positive electrode plates included in one element, and an average value thereof is substituted into the above formula. For example, when one element is composed of six positive electrode plates and seven negative electrodes, the pitch is measured at five positions. When one element is composed of seven positive electrode plates and seven negative electrode plates, the pitch is measured at six positions. The distance between the centers of the lugs may be measured at a lower part of a cross section of a strap connecting the lugs of the plurality of positive electrode plates in parallel for one element. When the lead-acid battery includes a plurality of elements, the element for measuring the inter-electrode distance is arbitrarily selected. When the inter-electrode distance is measured in two or more elements, the inter-electrode distance may be measured for each element in the same manner as described above.

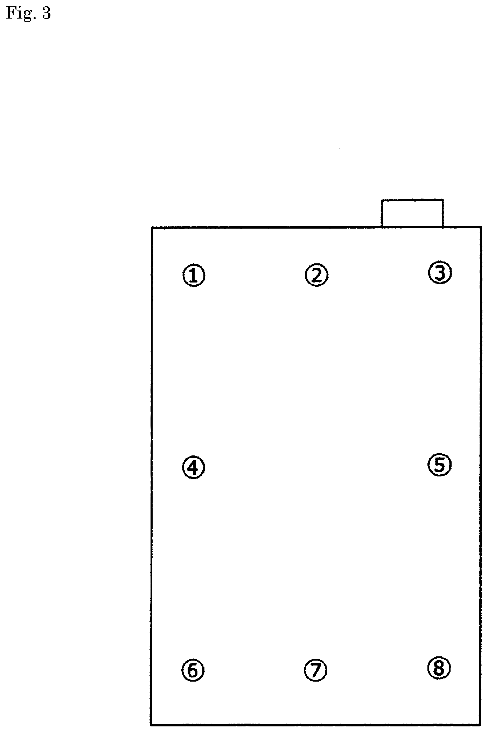

The thickness of the positive electrode plate is an average value of the thicknesses of all the positive electrode plates included in one element, and the thickness of the negative electrode plate is an average value of the thicknesses of all the negative electrode plates included in one element. The thicknesses of the negative electrode plate and the paste-type positive electrode plate is determined by, for example, measuring, with a micrometer, three points (eight points in total: positions indicated by numerals 1 to 8 in Fig. 3) near both ends and near the center per side along a peripheral edge of the electrode plate, and averaging the measured values. In the case of the clad-type positive electrode plate, in a shape obtained by projecting the clad-type positive electrode plate in a direction parallel to the width direction (that is, the shape of the clad-type positive electrode plate as viewed from the side surface.), the maximum thickness of a part where the positive electrode material exists is measured as the thickness of the positive electrode plate. The thickness of the positive electrode plate is measured after removal of sulfuric acid by washing with water and drying under atmospheric pressure, and the thickness of the negative electrode plate is measured after removal of sulfuric acid by washing with water and vacuum-drying (drying under a pressure lower than atmospheric pressure).

When a separator and a mat are used in combination for the element, and when a mat mainly composed of a nonwoven fabric is attached to the electrode plate, the thickness of the electrode plate is a thickness including the mat. This is because the mat is used integrally with the electrode plate. However, when the mat is attached to the separator, a thickness of the mat is included in a thickness of the separator.

### (Negative electrode plate)

The negative electrode plate usually includes a negative current collector in addition to a negative electrode material. The negative electrode material is a part of the negative electrode plate excluding the negative current collector from the negative electrode plate. Note that a member such as a mat or a pasting paper may be stuck to the negative electrode plate. Such a member (sticking member) is used integrally with the negative electrode plate and is thus included in the negative electrode plate. Also, when the negative electrode plate includes such a member, the negative electrode material is a part of the negative electrode plate excluding the negative current collector and the sticking member. However, when the sticking member (a mat, a pasting paper, etc.) is attached to a separator, a thickness of the sticking member is included in a thickness of the separator.

The negative current collector may be formed by casting lead (Pb) or a lead alloy, or may be formed by processing a lead sheet or a lead alloy sheet. Examples of the processing method include expanding processing and punching processing. It is preferable to use a grid-like current collector as the negative current collector because the negative electrode material is easily supported.

The lead alloy used for the negative current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like. The negative current collector may include a surface layer. The surface layer and the inner layer of the negative current collector may have different compositions. The surface layer may be formed in a part of the negative current collector. The surface layer may be formed in the lug part of the negative current collector. The surface layer of the lug part may contain Sn or a Sn alloy.

The negative electrode material contains an organic expander containing a unit of a monocyclic aromatic compound (Hereinafter, the organic expander may be referred to as a first organic expander.) (other than a lignin compound). The negative electrode material further contains a negative active material (lead or lead sulfate) that exhibits a capacity through a redox reaction. The negative electrode material may contain at least one selected from the group consisting of another organic expander (Hereinafter, the organic expander may be referred to as a second organic expander.), a carbonaceous material, and another additive. Examples of the additive include barium sulfate, fibers (resin fibers and the like), and the like, but are not limited thereto. Note that the negative active material in the charged state is spongy lead, and the non-formed negative electrode plate is usually prepared using a lead powder.

### (Organic expander)

The negative electrode material contains an organic expander. The organic expander refers to an organic compound among compounds having a function of suppressing shrinkage of lead as a negative active material when charge-discharge of the lead-acid battery are repeated. As described above, the negative electrode material contains the first organic expander as an essential component among the organic expanders, and may further contain the second organic expander as necessary. The first organic expander is an organic expander other than the lignin compound among organic expanders containing a unit of a monocyclic aromatic compound. The second organic expander is an organic expander other than the first organic expander. As the organic expander, for example, one synthesized by a known method may be used, or a commercially available product may be used.

Examples of each organic expander include a synthetic organic expander. The synthetic organic expander used in a lead-acid battery is usually an organic condensate (Hereinafter, it is simply referred to as a condensate.). The condensate is a compound that can be obtained using a condensation reaction. Since the lignin compound is a natural material, it is excluded from the condensate (synthetic organic expander) which is a synthetic. The condensate may include a unit of an aromatic compound (Hereinafter, it is also referred to as an aromatic compound unit.). Note that the aromatic compound unit refers to a unit derived from an aromatic compound incorporated in a condensate. That is, the aromatic compound unit is a residue of an aromatic compound. The condensate may contain one kind or two or more kinds of aromatic compound units.

Examples of the condensate include a condensate of an aromatic compound with an aldehyde compound. Such a condensate can be synthesized by reacting an aromatic compound with an aldehyde compound. Here, a condensate containing a sulfur element can be obtained by performing a reaction between an aromatic compound and an aldehyde compound in the presence of a sulfite or using an aromatic compound containing a sulfur element as an aromatic compound (for example, bisphenol S). For example, the sulfur element content in the condensate can be adjusted by adjusting at least one of the amount of the sulfite and the amount of the aromatic compound containing sulfur element. The method may be applied to the case of using other raw materials. The aromatic compound to be condensed for obtaining the condensate may be one kind or two or more kinds. The aldehyde compound may be an aldehyde (for example, formaldehyde), or a condensate (or a polymer) of an aldehyde. Examples of the aldehyde condensate (or polymer) include paraformaldehyde, trioxane, and tetraoxymethylene. The aldehyde compound may be used singly or in combination of two or more kinds thereof. Formaldehyde is preferable from the viewpoint of high reactivity with an aromatic compound.

The aromatic compound may have a sulfur-containing group. That is, the condensate may be an organic polymer containing a plurality of aromatic rings and a sulfur element as a sulfur-containing group in the molecule. The sulfur-containing group may be directly bonded to the aromatic ring of the aromatic compound, and for example, may be bonded to the aromatic ring as an alkyl chain having a sulfur-containing group. Among the sulfur-containing groups, a sulfonic acid group or a sulfonyl group which is in a stable form is preferable. The sulfonic acid group may exist in an acid form, or may exist in a salt form like a Na salt.

The sulfur-containing group is a functional group having strong negative polarity. Since such a functional group forms a stable bond with a water molecule, a hydrogen ion, and a hydrogensulfate ion in the electrolyte solution, the functional group tends to be unevenly distributed on the surface of the condensate. Since such a functional group unevenly distributed on the surface has a negative charge, electrostatic repulsion occurs between associates of condensates. As a result, association or aggregation of the colloidal particles of the condensate is limited, and the colloidal particle size tends to be small. As a result, it is considered that the pore size of the negative electrode material is small, and the specific resistance of the negative electrode material is likely to decrease. Therefore, when a condensate having a sulfur-containing group is used, the higher anti-shrink effect can be secured.

Examples of the aromatic ring of the aromatic compound include a benzene ring, a naphthalene ring, and the like. When the aromatic compound has a plurality of aromatic rings, the plurality of aromatic rings may be linked by a direct bond or a linking group (for example, an alkylene group (including an alkylidene group), a sulfone group), or the like. Examples of such a structure include bisarene structures (biphenyl, bisphenylalkane, bisphenylsulfone, and the like).

Examples of the aromatic compound include a compound having the aromatic ring and a functional group (hydroxy group, amino group, and the like). The functional group may be directly bonded to the aromatic ring, or may be bonded as an alkyl chain having a functional group. Note that the hydroxy group also includes salts of hydroxy group (-OMe). The amino group also includes salts of amino group (salts with anion). Examples of Me include alkali metals (Li, K, Na, and the like), Group 2 metals of the periodic table (Ca, Mg, and the like), and the like. The aromatic compound may have a sulfur-containing group and a substituent other than the functional group (for example, an alkyl group or an alkoxy group) in the aromatic ring.

The aromatic compound as the base of the aromatic compound unit may be at least one selected from the group consisting of a bisarene compound and a monocyclic aromatic compound.

Examples of the bisarene compound include a bisphenol compound, a hydroxybiphenyl compound, and a bisarene compound having an amino group (bisarylalkane compound having an amino group, bisarylsulfone compound having an amino group, biphenyl compound having an amino group, and the like). Among them, the bisphenol compound is preferable.

As the bisphenol compound, bisphenol A, bisphenol S, bisphenol F, and the like are preferable. For example, the bisphenol compound may contain at least one selected from the group consisting of bisphenol A and bisphenol S. By using bisphenol A or bisphenol S, the excellent anti-shrink effect on the negative electrode material can be obtained.

The bisphenol compound may have a bisphenol skeleton, and the bisphenol skeleton may have a substituent. That is, bisphenol A may have a bisphenol A skeleton, and the skeleton may have a substituent. Bisphenol S may have a bisphenol S skeleton, and the skeleton may have a substituent.

As the monocyclic aromatic compound, a hydroxymonoarene compound, an aminomonoarene compound, and the like are preferable. Among them, a hydroxymonoarene compound is preferable.

Examples of the hydroxymonoarene compound include a hydroxynaphthalene compound and a phenol compound. For example, it is preferable to use a phenolsulfonic acid compound which is a phenol compound (phenol sulfonic acid or a substitution product thereof). As described above, the phenolic hydroxy group also includes a salt of the phenolic hydroxy group (-OMe).

Examples of the aminomonoarene compound include an aminonaphthalene compound and an aniline compound (aminobenzenesulfonic acid, alkylaminobenzenesulfonic acid, etc.).

The sulfur element content of the organic expander other than the lignin compound may be, for example, 2000 µmol/g or more, or 3000 µmol/g or more. When the organic expander having such a sulfur element content is used, colloidal particles having an appropriate particle size are easily formed, so that the outflow of the organic expander is suppressed, and the effect of suppressing the permeation short circuit can be further enhanced. When the sulfur element content of the first organic expander described later is in such a range, in the organic expander to which flexibility is imparted by the unit of the monocyclic aromatic compound, the functional group containing the sulfur element is likely to be unevenly distributed on the surface of the organic expander. Therefore, higher adsorptivity to the components in the negative electrode material can be obtained, and the outflow of the first organic expander can be more effectively suppressed.

The sulfur element content in the organic expander being X µmol/g means that the content of the sulfur element contained per 1 g of the organic expander is X µmol.

The upper limit of the sulfur element content of the organic expander other than the lignin compound is not particularly limited, but may be, for example, 9000 µmol/g or less, 8000 µmol/g or less, or 7000 µmol/g or less.

The organic expander other than the lignin compound also includes an organic expander having a sulfur element content of less than 2000 µmol/g. The sulfur element content of such an organic expander may be 300 µmol/g or more.

The sulfur element content of the organic expander other than lignin may be, for example, 2000 µmol/g or more (or 3000 µmol/g or more) and 9000 µmol/g or less, 2000 µmol/g or more (or 3000 µmol/g or more) and 8000 µmol/g or less, 2000 µmol/g or more (or 3000 µmol/g or more) and 7000 µmol/g or less, 300 µmol/g or more and 9000 µmol/g or less (or 8000 µmol/g or less), or 300 µmol/g or more and 7000 µmol/g or less (or less than 2000 µmol/g).

The weight average molecular weight (Mw) of the organic expander other than lignin is preferably, for example, 7000 or more. The Mw of the organic expander is, for example, 100,000 or less, and may be 20,000 or less.

In the present specification, the Mw of the organic expander is determined by gel permeation chromatography (GPC). A standard substance used for determining the Mw is sodium polystyrene sulfonate.

The Mw is measured under the following conditions using the following apparatus.
GPC apparatus: Build-up GPC system SD-8022/DP-8020/AS-8020/CO-8020/UV-8020 (manufactured by Tosoh Corporation)
Column: TSKgel G4000SWXL, G2000SWXL (7.8 mm I.D. × 30 cm) (manufactured by Tosoh Corporation)
Detector: UV detector, λ = 210 nm
Eluent: Mixed solution of NaCl aqueous solution having a concentration of 1 mol/L: acetonitrile (volume ratio = 7:3)
Flow rate: 1 mL/min.
Concentration: 10 mg/mL
Injection amount: 10 µL
Standard substance: Na polystyrene sulfonate (Mw = 275,000, 35,000, 12,500, 7,500, 5,200, 1,680)

In the context of the invention, the first organic expander contains the unit of a monocyclic aromatic compound (for example, a condensate). Among the monocyclic aromatic compounds, a monocyclic compounds having a hydroxy group (in particular, a phenolic hydroxy group) (a hydroxymonoarene compound and the like) are preferable. In a condensate of the monocyclic compound having a phenolic hydroxy group with an aldehyde compound, the monocyclic compound is mainly condensed with the phenolic hydroxy group at least one of an ortho position and a para position (particularly at an ortho position). On the other hand, a condensate of a monocyclic compound having an amino group with an aldehyde compound is condensed via an amino group. Therefore, in the case of using a monocyclic compound having a phenolic hydroxy group, as compared with the case of using a monocyclic compound having an amino group, the twist between aromatic rings in the organic expander molecule is small, and the organic expander molecule is more likely to have a planar structure, so that it is considered that the organic expander molecule is more likely to act on lead or lead sulfate.

Among the units of the monocyclic aromatic compound, the first organic expander contains a unit of a phenolsulfonic acid compound. Such a first organic expander has a phenolic hydroxy group and a sulfonic acid group. Both the phenolic hydroxy group and the sulfonic acid group have strong negative polarity, and have high affinity with metal. In addition, the phenolsulfonic acid makes it easy for the condensate to have a planar structure. Therefore, the condensate containing the unit of a phenolsulfonic acid compound has higher adsorptivity to lead and lead sulfate. Therefore, when such a condensate is used, the outflow of the condensate from the negative electrode material can be more effectively suppressed.

The first organic expander contains a unit of the monocyclic aromatic compound and may further contain a unit of another aromatic compound (for example, a unit of a bisarene compound). Examples of the unit of the bisarene compound include at least one selected from the group consisting of a unit of a bisphenol S compound and a unit of a bisphenol A compound. As compared with the unit of a monocyclic aromatic compound, these units of a bisarene compound have a structure in which a linking group linking two aromatic rings protrudes from an aromatic ring plane, so that the first organic expander is less likely to adsorb lead or lead sulfate. However, even when the first organic expander contains such a unit of a bisarene compound, the first organic expander easily has a planar structure by containing a unit of a monocyclic monoarene compound. In an organic expander containing the unit of a bisarene compound, in general, an aromatic ring tends to interact between π electrons, and the organic expander tends to be rigid. However, in the first organic expander, the interaction between π-electrons of the unit of the bisarene compound is inhibited by the unit of the monocyclic aromatic compound, so that the flexibility of the molecule can be enhanced. As a result, it is considered that the functional group having negative polarity contained in the first organic expander is likely to be unevenly distributed on the molecular surface. Therefore, high adsorptivity of the first organic expander to lead and lead sulfate can be secured, and occurrence of a permeation short circuit can be suppressed.

When the first organic expander contains the unit of a monocyclic aromatic compound and the unit of another aromatic compound, the molar rate of the unit of the monocyclic aromatic compound to the total amount of these units is, for example, 10 mol% or more, and may be 20 mol% or more. When the molar rate is in such a range, the first organic expander more easily has a planar structure. The molar rate of the units of the monocyclic aromatic compound is, for example, 90 mol% or less, and may be 80 mol% or less.

The molar rate of the units of the monocyclic aromatic compound may be 10 mol% or more (or 20 mol% or more) and 90 mol% or less, or 10 mol% or more (or 20 mol% or more) and 80 mol% or less.

The sulfur element content and the Mw of the first organic expander can be each selected from the above ranges.

The first organic expander may be used singly or in combination of two or more kinds thereof.

As the second organic expander, in addition to the organic expander (condensate or the like) other than the first organic expander among the organic expanders, lignin is also included. Among the organic expanders described above, examples of the second organic expander include a condensate containing the unit of a bisarene compound (bisphenol compound or the like).

The sulfur element content of the lignin is, for example, less than 2000 µmol/g, and may be 1000 µmol/g or less or 800 µmol/g or less. The lower limit of the sulfur element content of lignin is not particularly limited, but is, for example, 400 µmol/g or more.

The Mw of lignin is, for example, less than 7000. The Mw of lignin is, for example, 3000 or more.

The second organic expander may be used singly or in combination of two or more kinds thereof. For example, a second organic expander other than lignin and lignin may be used in combination.

When the first organic expander and the second organic expander are used in combination, the mass ratio thereof can be arbitrarily selected. Even when the second organic expander is used in combination, the effect of suppressing the permeation short circuit and the sediment short circuit can be obtained according to the mass ratio of the first organic expander. From the viewpoint of securing a higher effect of suppressing a permeation short circuit and a higher effect of suppressing a sediment short circuit, the rate of the first organic expander to the all organic expanders (that is, the total amount of the first organic expander and the second organic expander) is preferably 20% by mass or more, and may be 50% by mass or more or 80% by mass or more.

The content of the organic expander contained in the negative electrode material is, for example, 0.01% by mass or more and may be 0.05% by mass or more. The content of the organic expander is, for example, 1.0% by mass or less and may be 0.5% by mass or less.

The content of the organic expander contained in the negative electrode material may be 0.01% by mass or more and 1.0% by mass or less, 0.05% by mass or more and 1.0% by mass or less, 0.01% by mass or more and 0.5% by mass or less, or 0.05% by mass or more and 0.5% by mass or less.

### (Barium sulfate)

The negative electrode material can contain barium sulfate. The content of barium sulfate in the negative electrode material is, for example, 0.05% by mass or more and may be 0.10% by mass or more. The content of barium sulfate in the negative electrode material is 3% by mass or less and may be 2% by mass or less.

The content of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

### (Carbonaceous material)

The negative electrode material can contain a carbonaceous material. As the carbonaceous material, carbon black, graphite, hard carbon, soft carbon, and the like can be used. Examples of the carbon black include acetylene black, furnace black, and lamp black. Furnace black also includes ketjen black (product name). The graphite may be a carbonaceous material including a graphite-type crystal structure and may be either artificial graphite or natural graphite. One kind of carbonaceous material may be used singly, or two or more kinds thereof may be used in combination.

The content of the carbonaceous material in the negative electrode material is, for example, preferably 0.05% by mass or more and may be 0.10% by mass or more. The content of the carbonaceous material is, for example, 5% by mass or less and may be 3% by mass or less.

The content of the carbonaceous material in the negative electrode material may be, for example, 0.05% by mass or more and 5% by mass or less, 0.05% by mass or more and 3% by mass or less, 0.10% by mass or more and 5% by mass or less, or 0.10% by mass or more and 3% by mass or less.

### (Analysis of constituent components of negative electrode material)

Hereinafter, a method of analyzing the negative electrode material or constituent components thereof will be described. Prior to analysis, a lead-acid battery after formation is fully charged and then disassembled to obtain a negative electrode plate to be analyzed. The obtained negative electrode plate is washed with water to remove sulfuric acid from the negative electrode plate. The washing with water is performed until it is confirmed that color of a pH test paper does not change by pressing the pH test paper against the surface of the negative electrode plate washed with water. However, the washing with water is performed within two hours. The negative electrode plate washed with water is dried at 60 ± 5°C in a reduced pressure environment for about six hours. After drying, when the sticking member is included in the negative electrode plate, the sticking member is removed from the negative electrode plate by peeling. Next, the negative electrode material is separated from the negative electrode plate to obtain a sample (hereinafter referred to as sample A). The sample A is ground as necessary and subjected to analysis.

### (1) Analysis of organic expander

### (1-1) Qualitative analysis of organic expander in negative electrode material

The pulverized sample A is immersed in a 1 mol/L sodium hydroxide (NaOH) aqueous solution to extract the organic expander. If the extract contains a plurality of organic expanders, then each organic expander is separated from the extract. For each separated material containing each organic expander, insoluble components are removed by filtration, and the obtained solution is desalted, then concentrated, and dried. The desalination is performed by using a desalination column, by causing the solution to pass through an ion-exchange membrane, or by placing the solution in a dialysis tube and immersing the solution in distilled water. The solution is dried to obtain a powder sample (hereinafter, referred to as a sample B) of the organic expander.

A type of the organic expander is specified using a combination of information obtained from an infrared spectroscopic spectrum measured using the sample B of the organic expander obtained as described above, an ultraviolet-visible absorption spectrum measured by an ultraviolet-visible absorption spectrometer after the sample B is diluted with distilled water or the like, or an NMR spectrum of a solution obtained by dissolving the sample B in a predetermined solvent such as heavy water, and the like.

When the extract contains a plurality of organic expanders, the organic expanders are separated as follows.

First, the extract is measured by at least one of infrared spectroscopy, NMR, and GC-MS to determine whether or not a plurality of kinds of organic expanders are contained. Next, a molecular weight distribution is measured by GPC analysis of the extract, and if the plurality of types of organic expanders can be separated by molecular weight, the organic expander is separated by column chromatography based on a difference in molecular weight.

The organic expander has different solubility when at least one of the type of functional group and the amount of functional group is different. When it is difficult to separate the organic expander due to a difference in molecular weight, one of the organic expanders is separated by a precipitation separation method using such a difference in solubility. For example, when two kinds of organic expanders are contained, an aqueous sulfuric acid solution is added dropwise to a mixture obtained by dissolving the extract in a NaOH aqueous solution to adjust the pH of the mixture, thereby aggregating and separating one of the organic expanders. When it is difficult to separate the first organic expander by aggregation, the first organic expander is separated by ion exchange chromatography or affinity chromatography using a difference in at least one of the type and amount of the functional group. The insoluble component is removed by filtration as described above from the separated material dissolved again in the NaOH aqueous solution. The remaining solution after separating one of the organic expanders is concentrated. The obtained concentrate contains the other organic expander, and the insoluble component is removed from the concentrate by filtration as described above.

### (1-2) Quantitative determination of content of organic expander in negative electrode material

Similarly to (1-1) above, for each separated material containing the organic expander, a solution is obtained after removing the insoluble component by filtration. The ultraviolet-visible absorption spectrum of each obtained solution is measured. The content of each organic expander in the negative electrode material is determined using an intensity of a characteristic peak of each organic expander and a calibration curve prepared in advance.

When a lead-acid battery in which the content of the organic expander is unknown is obtained and the content of the organic expander is measured, a structural formula of the organic expander cannot be strictly specified, so that the same organic expander may not be used for the calibration curve. In this case, the content of the organic expander is measured using the ultraviolet-visible absorption spectrum by creating a calibration curve using the organic expander extracted from the negative electrode of the battery and a separately available organic polymer in which the ultraviolet-visible absorption spectrum, the infrared spectroscopic spectrum, the NMR spectrum, and the like exhibit similar shapes.

### (1-3) Content of sulfur element in organic expander

Similarly to (1-1) above, after the sample B of the organic expander is obtained, sulfur element in 0.1 g of the organic expander is converted into sulfuric acid by an oxygen combustion flask method. At this time, the sample B is burned in a flask containing an adsorbent to obtain an eluate in which sulfate ions are dissolved in the adsorbent. Next, the eluate is titrated with barium perchlorate using thorin as an indicator to determine the content (C0) of the sulfur element in 0.1 g of the organic expander. Next, C0 is multiplied by 10 to calculate the content (µmol/g) of the sulfur element in the organic expander per 1 g.

### (2) Quantitative determination of carbonaceous material and barium sulfate

To 10 g of the pulverized sample A, 50 ml of nitric acid having a concentration of 20% by mass is added and heated for about 20 minutes to dissolve the lead component as lead nitrate. Next, a solution containing lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The obtained sample is a mixed sample of carbonaceous material and barium sulfate (hereinafter also referred to as sample C). A mass (Mₘ) of the sample C is measured by subtracting the mass of the membrane filter from the total mass of dried sample C and the membrane filter. Thereafter, the dried sample C is placed in a crucible together with a membrane filter and is burned and incinerated at 700°C or higher. The residue remaining is barium oxide. The mass (M_{B}) of barium sulfate is determined by converting the mass of barium oxide to the mass of barium sulfate. The mass of the carbonaceous material is calculated by subtracting the mass M_{B} from the mass Mₘ.

### (Positive electrode plate)

A positive electrode plate of a lead-acid battery usually contains a positive current collector and a positive electrode material. The positive electrode material is held by the positive current collector. The positive electrode plate of a lead-acid battery can be classified into a paste-type, a clad-type, and the like. Either a paste-type or a clad-type positive electrode plate may be used.

In the paste-type positive electrode plate, the positive electrode material is a part of the positive electrode plate excluding the positive current collector.

The clad-type positive electrode plate includes a plurality of porous tubes, a spine inserted into each tube, a current collector coupling the plurality of spines, a positive electrode material with which a spine inserted tube is filled, and a joint that couples the plurality of tubes. In the clad-type positive electrode plate, the positive electrode material is a material obtained by removing the tube, the spine, the current collector, and the joint. In the clad-type positive electrode plate, the spine and the current collector may be collectively referred to as a positive current collector.

A member such as a mat or a pasting paper may be stuck to the positive electrode plate. Such a member (sticking member) is used integrally with the positive electrode plate, and is thus included in the positive electrode plate. When the positive electrode plate includes a sticking member (a mat, a pasting paper, etc.), the positive electrode material is a part of the positive electrode plate excluding the positive current collector and the sticking member in the paste-type positive electrode plate. In the clad-type positive electrode plate, the positive electrode material is a part of the positive electrode plate excluding the tube, the positive current collector, a joint, and the sticking member (mat or the like).

The positive current collector may be formed by casting lead (Pb) or a lead alloy, or may be formed by processing a lead sheet or a lead alloy sheet. Examples of the processing method include expanding processing or punching processing. It is preferable to use a grid-like current collector as the positive current collector because the positive electrode material is easily supported.

As a lead alloy used for the positive current collector, a Pb-Sb alloy, a Pb-Ca alloy, or a Pb-Ca-Sn alloy are preferred in terms of corrosion resistance and mechanical strength. The positive current collector may include a surface layer. The surface layer and the inner layer of the positive current collector may have different compositions. The surface layer may be formed in a part of the positive current collector. The surface layer may be formed only on the grid part, only on the lug part, or only on the frame rib part of the positive current collector.

The positive electrode material contained in the positive electrode plate contains a positive active material (lead dioxide or lead sulfate) that exhibits a capacity through a redox reaction. The positive electrode material may optionally contain another additive.

The positive electrode material contains at least Sb as the additive. In this case, the occurrence amount of the sediment can be further reduced. This is because, when the positive electrode material contains Sb, softening of the positive electrode material is suppressed, and in addition, when the negative electrode material contains the first organic expander, elution of the organic expander is suppressed, and falling off of the positive electrode material is suppressed.

The content of Sb in the positive electrode material is, for example, 0.01% by mass or more, and may be 0.02% by mass or more. When the Sb content is in such a range, the effect of reducing the occurrence amount of the sediment is further enhanced. The content of Sb in the positive electrode material is, for example, 0.6% by mass or less. The content of Sb in the positive electrode material is preferably 0.5% by mass or less, and more preferably 0.4% by mass or less from the viewpoint of easily sufficiently exerting the effect of reducing the occurrence amount of the sediment by using Sb while suppressing the elution of Sb from the positive electrode material to a low level.

The content of Sb in the positive electrode material may be 0.01% by mass or more (or 0.02% by mass or more) and 0.6% by mass or less, 0.01% by mass or more (or 0.02% by mass or more) and 0.5% by mass or less, or 0.01% by mass or more (or 0.02% by mass or more) and 0.4% by mass or less.

A quantitative analysis method of antimony is shown below.

First, the lead-acid battery in a fully charged state is disassembled to take out the positive electrode plate. The positive electrode plate taken out is washed with water to remove sulfuric acid. The washing with water is performed until it is confirmed that color of a pH test paper does not change by pressing the pH test paper against the surface of the positive electrode plate washed with water. However, the washing with water is performed within two hours. The positive electrode plate washed with water is dried by blowing air at 60 ± 5°C. After drying, when the sticking member is included in the positive electrode plate, the sticking member is removed from the positive electrode plate by peeling. Next, an appropriate amount of a sample of the positive electrode material in a dry state (hereinafter, referred to as a sample D) is collected from the positive electrode plate. After measuring the mass of the collected sample D, the total amount of the sample D is dissolved in a mixed aqueous solution containing tartaric acid, nitric acid, and hydrogen peroxide. The obtained solution is diluted with ion-exchanged water as necessary to define a volume, and thereafter, emission intensity of Sb in the solution is measured by inductively coupled plasma (ICP) emission spectroscopy. The mass of Sb contained in the solution is obtained using a calibration curve prepared in advance. A rate (percentage) of the mass of Sb to the mass of the sample D of the positive electrode material subjected to analysis is determined as a content of Sb.

A non-formed clad-type positive electrode plate is formed by filling a porous tube, into which a spine connected by a current collector is inserted with a lead powder or a slurry-like lead powder, and joining a plurality of tubes with a joint. The positive electrode plate in which the positive electrode material contains Sb can be formed, for example, by using an antimony compound (for example, an oxide, a salt, and the like) as an additive.

The positive electrode plate is obtained by forming the non-formed positive electrode plate. The formation can be performed by charging the element in a state where the element including the non-formed positive electrode plate immersed in the electrolyte solution containing sulfuric acid in the container of the lead-acid battery. However, the formation may be performed before the lead-acid battery or the element is assembled.

### (Separator)

The separator can be disposed between the negative electrode plate and the positive electrode plate. As the separator, for example, at least one selected from a nonwoven fabric and a microporous film is used. The thickness of separators interposed between the negative electrode plate and the positive electrode plate may be selected in accordance with the inter-electrode distance. The number of separators may be selected according to the number between the poles.

The nonwoven fabric is a mat in which fibers are intertwined without being woven and is mainly made of fibers. In the nonwoven fabric, for example, 60% by mass or more of the nonwoven fabric is formed of fibers. As the fibers, there can be used glass fibers, polymer fibers (polyolefin fiber, acrylic fiber, polyester fiber (polyethylene terephthalate fiber, etc.), etc.), pulp fibers, and the like. Among them, glass fibers are preferable. The nonwoven fabric may contain components other than the fibers (for example, an acid resistant inorganic powder and a polymer as a binder).

On the other hand, the microporous film is a porous sheet mainly made of components except for fiber components and is obtained by, for example, extrusion molding a composition containing, for example, a pore-forming additive (at least one of a polymer powder and oil) into a sheet shape and then removing the pore-forming additive to form pores. The microporous film is preferably composed of a material having acid resistance, and is preferably composed mainly of a polymer component. As the polymer component, a polyolefin (a polyethylene, a polypropylene, etc.) is preferable.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other.

The separator may have a sheet shape or may be formed in a bag shape. One sheet-like separator may be disposed between the positive electrode plate and the negative electrode plate. Further, the electrode plate may be disposed so as to be sandwiched by one sheet-like separator in a folded state. In this case, the positive electrode plate sandwiched by the folded sheet-like separator and the negative electrode plate sandwiched by the folded sheet-like separator may be overlapped, or one of the positive electrode plate and the negative electrode plate may be sandwiched by the folded sheet-like separator and overlapped with the other electrode plate. Also, the sheet-like separator may be folded into a bellows shape, and the positive electrode plate and the negative electrode plate may be sandwiched by the bellows-shaped separator such that the separator is interposed therebetween. When the separator folded in a bellows shape is used, the separator may be disposed such that the folded part is along the horizontal direction of the lead-acid battery (e.g., such that the bent part may be parallel to the horizontal direction), and the separator may be disposed such that the folded part is along the vertical direction (e.g., such that the bent part is parallel to the vertical direction). In the separator folded in the bellows shape, recesses are alternately formed on both main surface sides of the separator. Since the lug parts are usually formed on the upper part of the positive electrode plate and the negative electrode plate, when the separator is disposed such that the folded parts are along the horizontal direction of the lead-acid battery, the positive electrode plate and the negative electrode plate are each disposed only in the recess on one main surface side of the separator (i.e., a double separator is interposed between the adjacent positive and negative plates). When the separator is disposed such that the folded part is along the vertical direction of the lead-acid battery, the positive electrode plate can be housed in the recess on one main surface side, and the negative electrode plate can be housed in the recess on the other main surface side (i.e., the separator can be interposed singly between the adjacent positive and negative plates). When the bag-shaped separator is used, the bag-shaped separator may house the positive electrode plate or may house the negative electrode plate.

In the present specification, in the plate, the up-down direction is defined with a side on which a lug part is provided as an upper side and a side opposite to the lug part as a lower side. The up-down direction of the plate is usually the same as the up-down direction of the lead-acid battery in the vertical direction.

The separator may include a rib on at least one surface. Such a separator includes a base part and a rib protruding from a surface (main surface) of the base part. Use of a separator having a rib on the surface on the positive electrode plate side is advantageous in suppressing oxidation deterioration of the separator. In addition, reduction deterioration of the positive electrode material can be suppressed, the effect of suppressing falling off of the positive electrode material can be further enhanced, and the effect of suppressing a sediment short circuit can be enhanced. The surface of the separator is a main surface (surface other than the end surface) that occupies most of the whole surface of the separator.

When the separator having the ribs on both surfaces is used, the permeation short circuit can be suppressed as compared with the case where the separator having the ribs only on the surface on the positive electrode plate side is used. When the first organic expander is used, the elution of lead is suppressed, so that the growth of metal lead is suppressed. When the growth of metal lead is suppressed by the first organic expander, the effect of suppressing a permeation short circuit by providing ribs on both surfaces of the separator is easily remarkably exhibited. Therefore, by combining the first organic expander and the ribs provided on both surfaces of the separator, the permeation short circuit occurrence rate can be significantly reduced.

The average height of each rib is, for example, 0.1 mm or more. The average height of the ribs is, for example, 1 mm or less, may be 0.9 mm or less, and may be 0.6 mm or less or 0.5 mm or less. In the separator, it is preferable that a rib is formed at such an average height at least in a region facing the electrode plate (preferably, a region where the electrode material exists).

The height of the rib refers to a distance from one surface of the base part to the top of the rib at a predetermined position of the rib. When the surface of the base part is not a flat surface, a distance from a highest position of one surface of the base part to a top part of the rib at a predetermined position of the rib when the separator is placed flat with the rib side facing upward is defined as a height of the rib. The average height of the ribs is obtained by averaging the heights of the ribs measured at arbitrarily selected 10 points of the rib on one surface of the base part. The height of the rib is measured for the separator taken out from the element.

The rib may be formed, for example, at the time of extrusion molding, or may be formed by pressing with a roller having a groove corresponding to the rib after molding into a sheet shape or after removing a pore-forming additive.

In the present specification, it can be said that the thickness of the separator in the lead-acid battery corresponds to the inter-electrode distance. Therefore, when the separator has a rib, the thickness of the separator is the thickness including the rib.

### (Electrolyte solution)

The electrolyte solution is an aqueous solution containing sulfuric acid and may be gelled as necessary. The electrolyte solution may contain at least one selected from the group consisting of a cation (for example, a metal cation) and an anion (for example, an anion other than a sulfate anion (a phosphate ion, etc.)) as necessary. Examples of the metal cation include at least one selected from the group consisting of a sodium ion, a lithium ion, a magnesium ion, and an aluminum ion.

The specific gravity of the electrolyte solution in the lead-acid battery in a fully charged state at 20°C is, for example, 1.20 or more and may be 1.25 or more. The specific gravity of the electrolyte solution at 20°C is 1.35 or less and preferably 1.32 or less.

The specific gravity of the electrolyte solution in the lead-acid battery in a fully charged state at 20°C may be 1.20 or more and 1.35 or less, 1.20 or more and 1.32 or less, 1.25 or more and 1.35 or less, or 1.25 or more and 1.32 or less.

The lead-acid battery can be obtained by a production method including a step of assembling a lead-acid battery by housing a positive electrode plate, a negative electrode plate, and an electrolyte solution in a container. In the assembly process of the lead-acid battery, the separator is usually disposed so as to be interposed between the positive electrode plate and the negative electrode plate. The assembly process of the lead-acid battery may include a step of forming at least one of the positive electrode plate and the negative electrode plate as necessary after the step of housing the positive electrode plate, the negative electrode plate, and the electrolyte solution in the container. The positive electrode plate, the negative electrode plate, the electrolyte solution, and the separator are each prepared before being housed in the container.

The lead-acid battery usually has a lid that covers the opening of the container. The lid may have a single structure (single lid), for example, a double structure including an inner lid and an outer lid (or upper lid). The lid having the double structure may have a reflux structure between the inner lid and the outer lid for returning the electrolyte solution into the battery (inside the inner lid) through a reflux port provided in the inner lid.

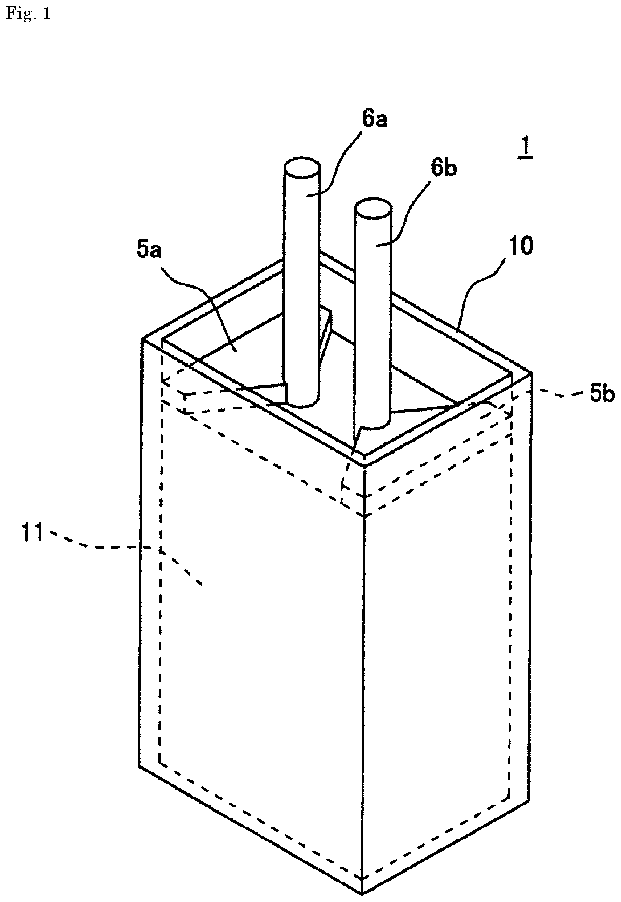

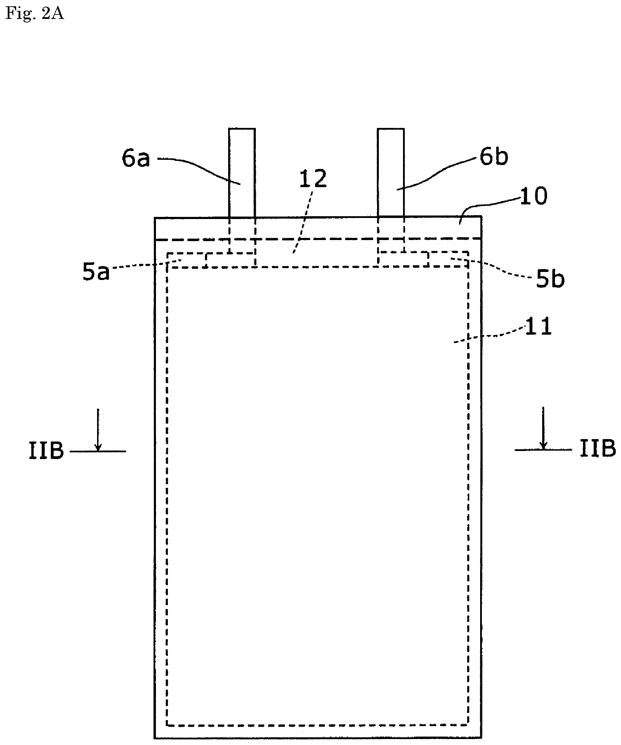

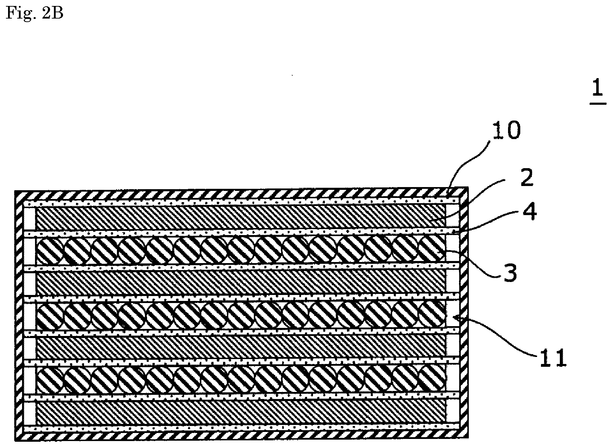

Fig. 1 is a perspective view schematically showing an example in which a lid of a lead-acid battery according to an embodiment of the present invention is removed. FIG. 2A is a front view of the lead-acid battery in FIG. 1, and FIG. 2B is a schematic cross-sectional view of a cross section taken along a line IIB-IIB in FIG. 2A as viewed from an arrow direction.

The lead-acid battery 1 includes a container 10 that houses an element 11 and an electrolyte solution 12. The element 11 is configured by laminating a plurality of negative electrode plates 2 and clad-type positive electrode plates 3 with a separator 4 interposed therebetween. Here, a state in which the sheet-like separator 4 is sandwiched between the negative electrode plate 2 and the clad-type positive electrode plate 3 is shown, but the form of the separator is not particularly limited.

An upper part of each of the plurality of negative electrode plates 2 is provided with a current collection lug part (not illustrated) projecting upward. An upper part of each of the plurality of clad-type positive electrode plates 3 is also provided with a current collection lug part (not illustrated) projecting upward. Then, the lug parts of the negative electrode plates 2 are connected and integrated with each other by a negative electrode strap 5a. Similarly, the lug parts of the clad-type positive electrode plates 3 are also connected and integrated with each other by a positive electrode strap 5b. A lower end part of the negative pole 6a is fixed to an upper part of the negative electrode strap 5a, and a lower end part of the positive pole 6b is fixed to an upper part of the positive electrode strap 5b.

A negative electrode plate for a lead-acid battery and a lead-acid battery according to one aspect of the present invention is described below.

### [Example]

Hereinafter, the present invention is specifically described on the basis of examples and comparative examples, but the present invention is not limited to the following examples.

### <<Lead-acid batteries E1 to E8 and R1 to R 20>>

### (1) Preparation of negative electrode plate

A lead powder (containing 80% by mass of lead oxide and 20% by mass of metal lead), 0.3% by mass of carbon black, 0.1% by mass of an organic expander, and 1.5% by mass of barium sulfate are mixed together with water and dilute sulfuric acid to prepare a negative electrode paste. A cast grid made of a Sb-based alloy as a negative current collector is filled with a negative electrode paste and dried to prepare a non-formed negative electrode plate. At this time, a negative electrode plate having a thickness of 4.5 mm is prepared using a grid having a thickness of 4.4 mm. The filling amount of the negative electrode paste is adjusted such that the amount of the negative active material contained in one negative electrode plate is 750 ± 6 g in terms of Pb. The length of the negative electrode plate is the same as the length of the tube of the positive electrode plate, and the width of the negative electrode plate is the same as the width of the positive electrode plate.

As the organic expander, those shown in Table 1 are used. The organic expanders shown in Table 1 are as follows.
A (second organic expander): sodium ligninsulfonate (sulfur element content: 600 µmol/g, Mw: 5500)
B1 (second organic expander): formaldehyde condensate of bisphenol S and bisphenol A (= 4 : 6 (molar ratio)) (sulfur element content: 4000 µmol/g, Mw: 9000)
C1 (first organic expander): formaldehyde condensate of bisphenol S and phenolsulfonic acid (= 2 : 8 (molar ratio)) (sulfur element content: 5000 µmol/g, Mw: 8000)
D1 (first organic expander): formaldehyde condensate of bisphenol A and phenolsulfonic acid (= 6 : 4 (molar ratio)) (sulfur element content: 2000 µmol/g, Mw: 8000)

### (1) Preparation of positive electrode plate

A clad-type positive electrode plate is prepared by the following procedure.

First, each of the fifteen spines having one end part in the length direction integrated with the current collector including the lug part is housed in each of the fifteen tubes. The current collector and one end part of the tube in the length direction on the current collector side are covered with a resin so that the lug part is exposed to form a resin-made upper joint. The material of the spine and the current collector is a Pb-Sb alloy, and the length of each spine is 295 mm. As the tube, a porous tube made of glass fiber having a length of 310 mm and an outer diameter of 9.5 mm is used.

A positive electrode slurry prepared by kneading a lead powder (containing 80% by mass of lead oxide and 20% by mass of metal lead), red lead, water, and dilute sulfuric acid is filled from an opening at the other end part in the length direction of the tube. The mass ratio of a lead powder and red lead is 9 : 1. The opening at the other end part of the tube is then sealed with the lower joint and dried. In this way, a non-formed clad-type positive electrode plate is prepared. The prepared positive electrode plate has a width of 143 mm.

The filling amount of the positive electrode slurry is adjusted so that the positive electrode plate after completion of formation contains 841 ± 8 g of the positive active material after formation per sheet in terms of PbO₂.

### (2) Preparation of lead-acid battery

Four non-formed negative electrode plates and three non-formed clad-type positive electrode plates each having a spine of the same shape are alternately stacked with a separator interposed therebetween to form an element as shown in FIG. 2B. At this time, each electrode plate is disposed such that the inter-electrode distance obtained by the procedure described above has the value shown in Table 1. As the separator, a polypropylene microporous film having a rib on one surface is used. The separator is disposed such that the rib is positioned on the positive electrode plate side.

The element is housed in a polypropylene container, diluted sulfuric acid having a specific gravity of 1.28 at 20°C is injected into the container, and a lid is fixed to an opening of the container by adhesion. Formation is performed in a state where the container is held in a water tank at 30°C ± 2°C. In this way, lead-acid batteries E1 to E8 and R1 to R20 having a rated capacity (5 hour rate) of 165 Ah are obtained. The lead-acid battery is almost fully charged by formation.

### (3) Evaluation

Using the lead-acid battery after formation in a fully charged state, a cycle test is performed by a high-temperature deep discharge cycle. In the cycle test, the lead-acid battery is discharged at a current of 41.3 A for 3 hours and charged at a current of 29.7 A for 5.42 hours while being held in a water tank at a temperature of 75°C ± 0.5°C. The cycle of discharge and charge is set as 1 cycle, and 500 cycles of charge-discharge are repeated.

The lead-acid battery after the cycle test is disassembled, and a permeation mark in the separator is confirmed. The rate of the number of lead-acid batteries having a confirmed permeation mark among the twenty lead-acid batteries is evaluated as the occurrence rate of a permeation short circuit.

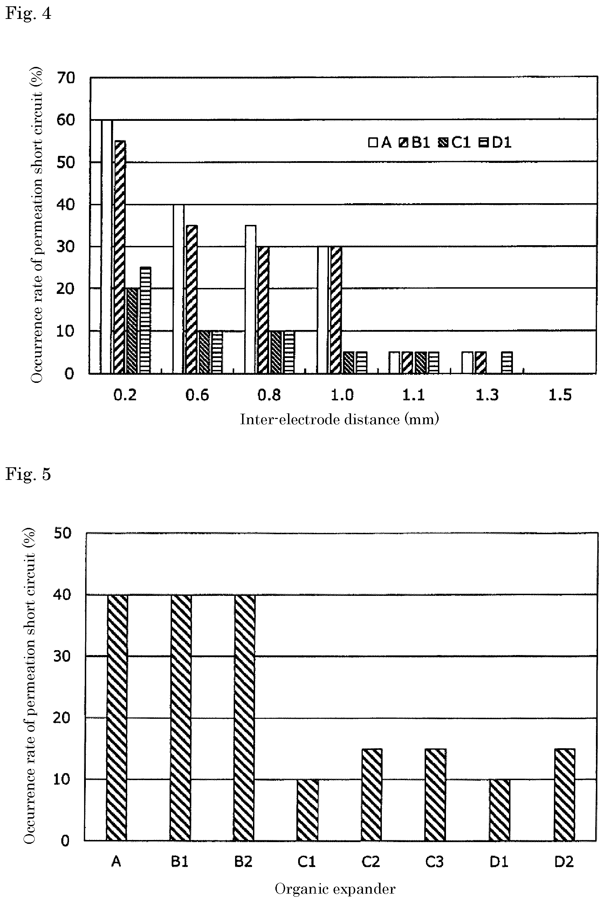

Table 1 and Fig. 4 show the results.

**[Table 1]**

| | | Inter-electrode distance (mm) | | | | | | |
|---|---|---|---|---|---|---|---|---|
| | | 0.2 | 0.6 | 0.8 | 1.0 | 1.1 | 1.3 | 1.5 |
| | Organic expander A | (R1) | (R2) | (R3) | (R4) | (R5) | (R6) | (R7) |
| | | 60 | 40 | 35 | 30 | 5 | 5 | 0 |
| Occurrence rate of permeation short circuit (%) | Organic expander B1 | (R8) | (R9) | (R10) | (R11) | (R12) | (R13) | (R14) |
| | | 55 | 35 | 30 | 30 | 5 | 5 | 0 |
| | Organic expander C1 | (E1) | (E2) | (E3) | (E4) | (R15) | (R16) | (R17) |
| | | 20 | 10 | 10 | 5 | 5 | 0 | 0 |
| | Organic expander D1 | (E5) | (E6) | (E7) | (E8) | (R18) | (R19) | (R20) |
| | | 25 | 10 | 10 | 5 | 5 | 5 | 0 |

As shown in Table 1 and Fig. 4, when the inter-electrode distance is 1.1 mm or more, the occurrence rate of a permeation short circuit is not so different between the case of using the organic expander A or the organic expander B1 as the second organic expander and the case of using the organic expander C1 or the organic expander D1 as the first organic expander. However, when the inter-electrode distance is less than 1.1 mm, when the second organic expander is used, the occurrence rate of a permeation short circuit remarkably increases. On the other hand, when the first organic expander is used, even when the inter-electrode distance is less than 1.1 mm, an increase in the occurrence rate of a permeation short circuit can be significantly suppressed. This is considered to be because when the first organic expander contains a unit of a monocyclic aromatic compound, the first organic expander easily has a planar structure and is easily adsorbed to lead or lead sulfate in the negative electrode material as compared with the case of the organic expander A or the organic expander B1. Accordingly, in the lead-acid batteries E1 to E8, it is considered that the organic expander is retained in the negative electrode material and elution of lead is suppressed even when a high-temperature deep discharge cycle test is performed.

### <<Lead-acid batteries E9 to E13 and R21 to R23>>

As the organic expander, the organic expanders shown in Table 2 are used. As the separator, a polypropylene microporous film having ribs on both surfaces is used. Except for these, lead-acid batteries E9 to E13 and R21 to R23 are prepared in the same manner as the lead-acid battery E2, and a cycle test is performed. The inter-electrode distance in these lead-acid batteries is 0.6 mm.

As the organic expander shown in Table 2, the following organic expanders are used. A, B1, C1, and D1 are the same as in Table 1.
B2 (second organic expander): formaldehyde condensate of bisphenol S and bisphenol A (= 8 : 2 (molar ratio)) (sulfur element content: 5000 µmol/g, Mw: 9000)
C2 (first organic expander): formaldehyde condensate of bisphenol S and phenolsulfonic acid (= 6 : 4 (molar ratio)) (sulfur element content: 4300 pmol/g, Mw: 8000)
C3 (first organic expander): formaldehyde condensate of bisphenol S and phenolsulfonic acid (= 8 : 2 (molar ratio)) (sulfur element content: 4000 pmol/g, Mw: 8000)
D2 (first organic expander): formaldehyde condensate of bisphenol A and phenolsulfonic acid (= 9 : 1 (molar ratio)) (sulfur element content: 400 µmol/g, Mw: 8000)

For the lead-acid battery after the cycle test, the occurrence rate of a sediment short circuit is measured. The occurrence rate of a sediment short circuit is determined by checking the transition of the voltage at the end of discharge during the cycle test. The voltage at the end of discharge usually gradually decreases with the progress of the cycle, but a sudden decrease in the voltage at the end of discharge is confirmed when a sediment short circuit occurs.

More specifically, a plurality of lead-acid batteries after formation in a fully charged state are prepared, and a cycle test is performed on each lead-acid battery by a high-temperature deep discharge cycle under the above-described conditions. The transition of the voltage at the end of discharge during the cycle test is confirmed, and the lead-acid battery in which the amount of decrease in the voltage at the end of discharge during 10 cycles, that is, ΔV is 150 mV or more are selected. The selected lead-acid battery is disassembled, and it is confirmed whether or not there is a short circuit site due to the accumulation of the sediment in the upper part of the element and the strap for collecting the negative electrode plate and the positive electrode plate. Then, the rate of the number of lead-acid batteries in which a short circuit location due to accumulation of the sediment is confirmed is obtained as the occurrence rate of the sediment short circuit.

Table 2 and Fig. 5 show the results.

**[Table 2]**

| | R21 | R22 | R23 | E9 | E10 | E11 | E12 | E13 |
|---|---|---|---|---|---|---|---|---|
| Organic expander | A | B1 | B2 | C1 | C2 | C3 | D1 | D2 |
| occurrence rate of sediment short circuit (%) | 40 | 40 | 40 | 10 | 15 | 15 | 10 | 15 |

[

As shown in Table 2 and Fig. 5, in the lead-acid batteries R21 to R23 using the organic expander A and the organic expanders B1 and B2 which are the second organic expanders, the occurrence rate of the sediment short circuit is as high as 40%. On the other hand, in the lead-acid batteries E9 to E13 in which the organic expanders C1 to C3 and D1 to D2 as the first organic expanders are used, the occurrence rate of a sediment short circuit is as low as 10 to 15%. It is considered that this is because the lead-acid batteries E9 to E13 suppress the elution of the organic expander as compared with the lead-acid batteries R21 to R23, so that the positive electrode material is suppressed from falling off.

### <<Lead-acid batteries E14 to E16 and R24>>

As the organic expander, C2, C3, D2 or B2 shown in Table 3 is used. Except for this, lead-acid batteries E14 to E16 and R24 are prepared in the same manner as in the lead-acid battery E2, and the occurrence rate of a permeation short circuit is evaluated. The organic expanders are the same as the organic expanders shown in Table 2. The occurrence rate of a permeation short circuit is similarly evaluated for the lead-acid batteries E9 to E13 and R21 to R23. The inter-electrode distance in these lead-acid batteries is 0.6 mm.

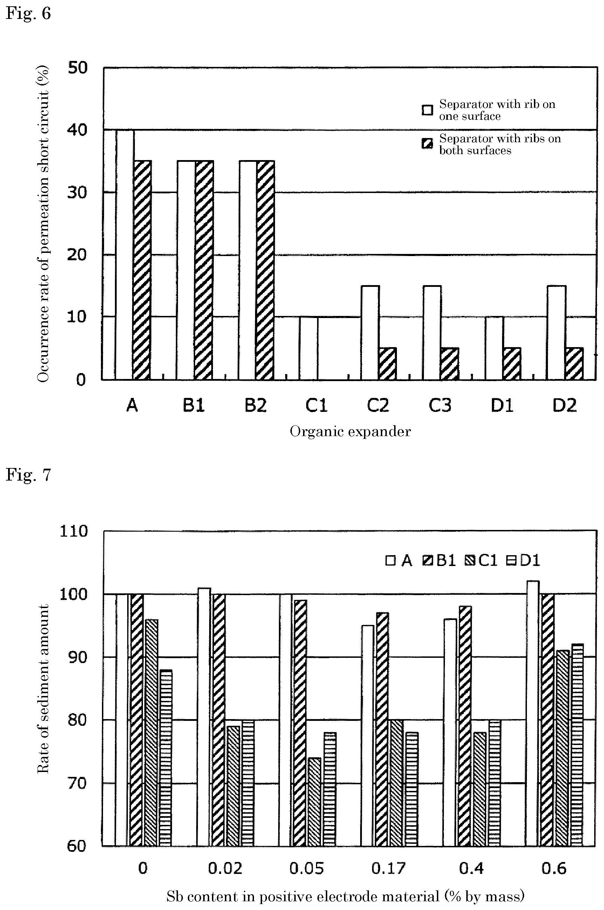

Table 3 and Fig. 6 show the results. The results of the lead-acid batteries E2, E6, R2, and R9 are also shown in Table 3.

**[Table 3]**

| | | Organic expander | | | | | | | |
|---|---|---|---|---|---|---|---|---|---|
| | | A | B1 | B2 | C1 | C2 | C3 | D1 | D2 |
| Occurrence rate of permeation short circuit (%) | Separator with rib on one surface | (R2) | (R9) | (R24) | (E2) | (E14) | (E15) | (E6) | (E16) |
| | | 40 | 35 | 35 | 10 | 15 | 15 | 10 | 15 |
| | Separator with ribs on both surfaces | (R21) | (R22) | (R23) | (E9) | (E10) | (E11) | (E12) | (E13) |
| | | 35 | 35 | 35 | 0 | 5 | 5 | 5 | 5 |

As shown in Table 3 and Fig. 6, when the organic expander A, B1 or B2 which is the second organic expander is used, there is no difference in the occurrence rate of a permeation short circuit between the separator having the rib on one surface and the separator having the rib on both surfaces. However, when the organic expanders C1 to C3 or D1 to D2 which are the first organic expanders are used, the occurrence of a permeation short circuit can be further suppressed when a separator having ribs on both surfaces as compared with the case where a separator having the rib on one surface is used. It is considered that this is because even in a high-temperature deep discharge cycle, in addition to the elution of the first organic expander being suppressed, the presence of a rib on the negative electrode plate side in addition to the positive electrode plate side suppresses the growth of metal lead itself.

### <<Lead-acid batteries E17 to E26 and R25 to R34>>

A lead-acid battery E2 and a positive electrode paste are prepared except that an antimony compound (antimony trioxide) is used together with a lead powder and red lead. At this time, the respective components are mixed so that the Sb content in the positive electrode material determined by the procedure described above is the value shown in Table 4. As the organic expander, the organic expanders shown in Table 4 are used. Except for these, lead-acid batteries E17 to E26 and R25 to R34 are prepared in the same manner as the lead-acid battery E2. The inter-electrode distance in these lead-acid batteries is 0.6 mm.

A life cycle test is performed using the lead-acid battery after formation in a fully charged state. In the life cycle test, the lead-acid battery is discharged at a current of 41.3 A for 2.64 hours and charged at a current of 29.7 A for 4.8 hours while being held in a water tank at a temperature of 15°C ± 0.5°C. The cycle of discharge and charge is set as 1 cycle, and 1200 cycles of charge-discharge are repeated.

The lead-acid battery after the life cycle test is disassembled, and the solid content deposited on the bottom of the container and the solid content attached to the upper part and the side surface of the negative electrode plate are recovered. The recovered solid content is washed with water and then dried, and the mass thereof is measured. The total amount of the solid content is taken as the occurrence amount of the sediment.

The lead-acid batteries E2, E6, R2, and R9 are also similarly evaluated, and the occurrence amount of the sediment is obtained. The occurrence amount of the sediment in each lead-acid battery is represented by a rate when the occurrence amount of the sediment in the lead-acid battery R2 is 100.

Table 4 and Fig. 7 show the results.

**[Table 4]**

| | Content of Sb in positive electrode material (% by mass) | Organic expander | | | |
|---|---|---|---|---|---|
| | | A | B1 | C1 | D1 |
| | 0 | (R2) | (R9) | (E2) | (E6) |
| | | 100 | 100 | 96 | 88 |
| | 0.02 | (R25) | (R26) | (E17) | (E18) |
| | | 101 | 100 | 79 | 80 |
| Occurrence amount of sediment | 0.05 | (R27) | (R28) | (E19) | (E20) |
| | | 100 | 99 | 74 | 78 |
| | 0.17 | (R29) | (R30) | (E21) | (E22) |
| | | 95 | 97 | 80 | 78 |
| | 0.4 | (R31) | (R32) | (E23) | (E24) |
| | | 96 | 98 | 78 | 80 |
| | 0.6 | (R33) | (R34) | (E25) | (E26) |
| | | 102 | 100 | 91 | 92 |

As shown in Table 4 and FIG. 7, when the organic expander A or B1 which is the second organic expander is used, the occurrence amount of the sediment does not change so much even when the positive electrode material contains Sb. However, when the organic expander C1 or D1 as the first organic expander is used, the positive electrode material contains Sb, so that the occurrence amount of the sediment is greatly reduced. From the viewpoint of further reducing the occurrence amount of the sediment, the content of Sb in the positive electrode material is preferably 0.5% by mass or less or 0.4% by mass or less. For the same reason, the content of Sb in the positive electrode material is preferably 0.01% by mass or more or 0.02% by mass or more.

### INDUSTRIAL APPLICABILITY

The lead-acid battery according to one aspect of the present invention can be suitably used as, for example, a power source for starting a vehicle (an automobile, a motorcycle, etc.) and a power source of an industrial energy storage apparatus such as an electric vehicle (a forklift, an automated guided vehicle (AGV), etc.). Note that these applications are merely illustrative and not limited to these applications.

### DESCRIPTION OF REFERENCE SIGNS

1: Lead-acid battery
2: Negative electrode plate
3: Positive electrode plate
4: Separator
5a: Negative electrode strap
5b: Positive electrode strap
6a: Negative pole
6b: Positive pole
10: Container
11: Element
12: Electrolyte solution

## Claims

1. A lead-acid battery (1) comprising at least one element (11) and an electrolyte solution,
wherein the element (11) includes a positive electrode plate (3), a negative electrode plate (2), and a separator (4) interposed between the positive electrode plate (3) and the negative electrode plate (2), and
in the at least one element (11),
the negative electrode plate (2) includes a negative electrode material,
the negative electrode material includes an organic expander excluding a lignin compound containing a unit of a monocyclic aromatic compound,
an inter-electrode distance between the positive electrode plate (3) and the negative electrode plate (2) is less than 1.1 mm,
wherein the positive electrode plate (3) includes a positive electrode material, and the positive electrode material contains Sb, and
wherein the unit of the monocyclic aromatic compound includes at least a unit of a phenolsulfonic acid compound.

2. The lead-acid battery (1) according to claim 1, wherein the inter-electrode distance is 1.0 mm or less.

3. The lead-acid battery (1) according to claim 1 or 2, wherein the separator (4) includes a rib on at least one surface, or wherein the separator (4) includes ribs on both surfaces.

4. The lead-acid battery (1) according to claim 3, wherein an average height of the ribs is 0.1 mm or more and 1 mm or less.

5. The lead-acid battery (1) according to any one of claims 1 to 4, wherein
the organic expander further contains a unit of a bisarene compound, and
the unit of a bisarene compound is at least one selected from the group consisting of a unit of a bisphenol S compound and a unit of a bisphenol A compound.

6. The lead-acid battery (1) according to any one of claims 1 to 5, wherein the positive electrode plate (3) is a clad-type positive electrode plate.

7. The lead-acid battery (1) according to any one of claims 1 to 6,
wherein a content of Sb in the positive electrode material is 0.01% by mass or more and 0.6% by mass or less, or
wherein a content of Sb in the positive electrode material is 0.02% by mass or more and 0.5% by mass or less.

8. The lead-acid battery (1) according to any one of claims 1 to 7, wherein a content of Sb in the positive electrode material is 0.4% by mass or less.

9. The lead-acid battery (1) according to any one of claims 1 to 8, wherein in 50% or more of the total number of the elements (11) or in all the elements (11), the negative electrode plate (2) contains the organic expander, and the inter-electrode distance is less than 1.1 mm, and/or wherein the inter-electrode distance is 0.2 mm or more.

10. The lead-acid battery (1) according to any one of claims 1 to 9, wherein the organic expander has a sulfur element content of 300 µmol/g or more and 9000 µmol/g or less, optionally wherein the organic expander has a sulfur element content of 3000 µmol/g or more, or wherein the organic expander has a sulfur element content of 300 µmol/g or more and less than 2000 µmol/g.

11. The lead-acid battery (1) according to any one of claims 1 to 10, wherein the organic expander has a weight average molecular weight (Mw) of 7000 or more and 100,000 or less.

12. The lead-acid battery (1) according to any one of claims 1 to 11, wherein the organic expander contains a unit of the monocyclic aromatic compound and a unit of another aromatic compound, wherein a molar rate of the unit of a monocyclic aromatic compound to a total amount of the unit of a monocyclic aromatic compound and the unit of another aromatic compound preferably is 10 mol% or more and 90 mol% or less, wherein the organic expander is a synthetic expander.

13. The lead-acid battery (1) according to claim 12, wherein a rate of an organic expander containing the unit of a monocyclic aromatic compound to a total amount of the organic expander contained in the negative electrode material is 20% by mass or more.

14. The lead-acid battery (1) according to any one of claims 1 to 13, wherein a total amount of the content of an organic expander contained in the negative electrode material is 0.01% by mass or more and 1.0% by mass or less.

## Patentansprüche

1. Bleiakkumulator (1), umfassend mindestens ein Element (11) und eine Elektrolytlösung,
wobei das Element (11) eine positive Elektrodenplatte (3), eine negative Elektrodenplatte (2) und einen Separator (4) umfasst, der zwischen der positiven Elektrodenplatte (3) und der negativen Elektrodenplatte (2) positioniert ist, und
in dem mindestens einen Element (11),
die negative Elektrodenplatte (2) ein negatives Elektrodenmaterial umfasst,
das negative Elektrodenmaterial einen organischen Expander umfasst, ausgenommen eine Ligninverbindung, die eine Einheit einer monocyclischen aromatischen Verbindung enthält,
ein Zwischenelektrodenabstand zwischen der positiven Elektrodenplatte (3) und der negativen Elektrodenplatte (2) weniger als 1,1 mm beträgt,
wobei die positive Elektrodenplatte (3) ein positives Elektrodenmaterial umfasst und das positive Elektrodenmaterial Sb enthält, und
wobei die Einheit der monocyclischen aromatischen Verbindung mindestens eine Einheit einer Phenolsulfonsäureverbindung umfasst.

2. Bleiakkumulator (1) nach Anspruch 1, wobei der Zwischenelektrodenabstand 1,0 mm oder weniger beträgt.

3. Bleiakkumulator (1) nach Anspruch 1 oder 2, wobei der Separator (4) eine Rippe auf mindestens einer Fläche umfasst oder wobei der Separator (4) Rippen auf beiden Flächen umfasst.

4. Bleiakkumulator (1) nach Anspruch 3, wobei eine mittlere Höhe der Rippen 0,1 mm oder mehr und 1 mm oder weniger beträgt.

5. Bleiakkumulator (1) nach einem der Ansprüche 1 bis 4, wobei
der organische Expander ferner eine Einheit einer Bisarenverbindung enthält und
die Einheit einer Bisarenverbindung mindestens eines ausgewählt aus der Gruppe ist, die aus einer Einheit einer Bisphenol-S-Verbindung und einer Einheit einer Bisphenol-A-Verbindung besteht.

6. Bleiakkumulator (1) nach einem der Ansprüche 1 bis 5, wobei die positive Elektrodenplatte (3) eine positive Elektrodenplatte vom Plattierungstyp ist.

7. Bleiakkumulator (1) nach einem der Ansprüche 1 bis 6, wobei ein Gehalt an Sb in dem positiven Elektrodenmaterial 0,01 Masse-% oder mehr und 0,6 Masse-% oder weniger beträgt, oder
wobei ein Gehalt an Sb in dem positiven Elektrodenmaterial 0,02 Masse-% oder mehr und 0,5 Masse-% oder weniger beträgt.

8. Bleiakkumulator (1) nach einem der Ansprüche 1 bis 7, wobei der Gehalt an Sb in dem positiven Elektrodenmaterial 0,4 Masse-% oder weniger beträgt.

9. Bleiakkumulator (1) nach einem der Ansprüche 1 bis 8, wobei in 50 % oder mehr der Gesamtzahl der Elemente (11) oder in allen Elementen (11) die negative Elektrodenplatte (2) den organischen Expander enthält und der Zwischenelektrodenabstand weniger als 1,1 mm beträgt und/oder wobei der Zwischenelektrodenabstand 0,2 mm oder mehr beträgt.

10. Bleiakkumulator (1) nach einem der Ansprüche 1 bis 9, wobei der organische Expander einen Schwefelelementgehalt von 300 µmol/g oder mehr und 9000 µmol/g oder weniger aufweist, wobei der organische Expander gegebenenfalls einen Schwefelelementgehalt von 3000 µmol/g oder mehr aufweist oder wobei der organische Expander einen Schwefelelementgehalt von 300 µmol/g oder mehr und weniger als 2000 µmol/g aufweist.

11. Bleiakkumulator (1) nach einem der Ansprüche 1 bis 10, wobei der organische Expander ein gewichtsgemitteltes Molekulargewicht (Mw) von 7000 oder mehr und 100.000 oder weniger aufweist.

12. Bleiakkumulator (1) nach einem der Ansprüche 1 bis 11, wobei der organische Expander eine Einheit der monocyclischen aromatischen Verbindung und eine Einheit einer anderen aromatischen Verbindung enthält, wobei ein Molverhältnis der Einheit einer monocyclischen aromatischen Verbindung zu einer Gesamtmenge der Einheit einer monocyclischen aromatischen Verbindung und der Einheit einer anderen aromatischen Verbindung vorzugsweise 10 Mol-% oder mehr und 90 Mol-% oder weniger beträgt, wobei der organische Expander ein synthetischer Expander ist.

13. Bleiakkumulator (1) nach Anspruch 12, wobei ein Verhältnis eines organischen Expanders, enthaltend die Einheit einer monocyclischen aromatischen Verbindung, zu einer Gesamtmenge des organischen Expanders, der in dem negativen Elektrodenmaterial enthalten ist, 20 Masse-% oder mehr beträgt.

14. Bleiakkumulator (1) nach einem der Ansprüche 1 bis 13, wobei eine Gesamtmenge des Gehalts eines organischen Expanders, der in dem negativen Elektrodenmaterial enthalten ist, 0,01 Masse-% oder mehr und 1,0 Masse-% oder weniger beträgt.

## Revendications

1. Batterie au plomb (1) comprenant au moins un élément (11) et une solution électrolytique,
dans laquelle l'élément (11) inclut une plaque d'électrode positive (3), une plaque d'électrode négative (2) et un séparateur (4) interposé entre la plaque d'électrode positive (3) et la plaque d'électrode négative (2), et
dans ledit au moins un élément (11),
la plaque d'électrode négative (2) inclut un matériau d'électrode négative,
le matériau d'électrode négative inclut un agent d'expansion organique à l'exclusion d'un composé de lignine contenant une unité d'un composé aromatique monocyclique,
une distance inter-électrodes entre la plaque d'électrode positive (3) et plaque d'électrode négative (2) est inférieure à 1,1 mm,
dans laquelle la plaque d'électrode positive (3) inclut un matériau d'électrode positive, et le matériau d'électrode positive contient du Sb, et
dans laquelle l'unité du composé aromatique monocyclique inclut au moins une unité d'un composé d'acide phénolsulfonique.

2. Batterie au plomb (1) selon la revendication 1, dans laquelle la distance inter-électrodes est de 1,0 mm ou moins.

3. Batterie au plomb (1) selon la revendication 1 ou 2, dans laquelle le séparateur (4) inclut une nervure sur au moins une surface, ou dans laquelle le séparateur (4) inclut des nervures sur les deux surfaces.

4. Batterie au plomb (1) selon la revendication 3, dans laquelle la hauteur moyenne des nervures est de 0,1 mm ou plus et de 1 mm ou moins.

5. Batterie au plomb (1) selon l'une quelconque des revendications 1 à 4, dans laquelle
l'agent d'expansion organique contient en outre une unité d'un composé de bisarène, et
l'unité d'un composé de bisarène est au moins une unité choisie dans le groupe constitué par une unité d'un composé de bisphénol S et une unité d'un composé de bisphénol A.

6. Batterie au plomb (1) selon l'une quelconque des revendications 1 à 5, dans laquelle la plaque d'électrode positive (3) est une plaque d'électrode positive de type plaquée.

7. Batterie au plomb (1) selon l'une quelconque des revendications 1 à 6,
dans laquelle la teneur en Sb dans le matériau d'électrode positive est de 0,01 % en masse ou plus et de 0,6 % en masse ou moins, ou
dans laquelle la teneur en Sb dans le matériau d'électrode positive est de 0,02 % en masse ou plus et de 0,5 % en masse ou moins.

8. Batterie au plomb (1) selon l'une quelconque des revendications 1 à 7, dans laquelle la teneur en Sb dans le matériau d'électrode positive est de 0,4 % en masse ou moins.

9. Batterie au plomb (1) selon l'une quelconque des revendications 1 à 8, dans laquelle, dans 50 % ou plus du nombre total d'éléments (11) ou dans tous les éléments (11), la plaque d'électrode négative (2) contient l'agent d'expansion organique, et la distance inter-électrodes est inférieure à 1,1 mm, et/ou dans laquelle la distance inter-électrodes est de 0,2 mm ou plus.

10. Batterie au plomb (1) selon l'une quelconque des revendications 1 à 9, dans laquelle l'agent d'expansion organique a une teneur en élément soufre de 300 µmol/g ou plus et de 9 000 µmol/g ou moins, éventuellement dans laquelle l'agent d'expansion organique a une teneur en élément soufre de 3000 µmol/g ou plus, ou dans laquelle l'agent d'expansion organique a une teneur en élément soufre de 300 µmol/g ou plus et de moins de 2 000 µmol/g.

11. Batterie au plomb (1) selon l'une quelconque des revendications 1 à 10, dans laquelle l'agent d'expansion organique a un poids moléculaire moyen en poids (Mw) de 7 000 ou plus et de 100 000 ou moins.

12. Batterie au plomb (1) selon l'une quelconque des revendications 1 à 11, dans laquelle l'agent d'expansion organique contient une unité du composé aromatique monocyclique et une unité d'un autre composé aromatique, dans laquelle un rapport molaire de l'unité du composé aromatique monocyclique sur une quantité totale de l'unité d'un composé aromatique monocyclique et de l'unité d'un autre composé aromatique est de préférence de 10 % en moles ou plus et 90 % en moles ou moins, dans laquelle l'agent d'expansion organique est un agent d'expansion synthétique.

13. Batterie au plomb (1) selon la revendication 12, dans laquelle le rapport d'un agent d'expansion organique contenant l'unité d'un composé aromatique monocyclique sur une quantité totale de l'agent d'expansion organique contenu dans le matériau d'électrode négative est de 20 % en masse ou plus.

14. Batterie au plomb (1) selon l'une quelconque des revendications 1 à 13, dans laquelle une quantité totale d'un agent d'expansion organique contenu dans le matériau d'électrode négative est de 0,01 % en masse ou plus et 1,0 % en masse ou moins.
